# EUROPÄISCHE PATENTSCHRIFT

(11) **EP 2 357 424 B1**
(45) Veröffentlichungstag und Bekanntmachung des Hinweises auf die Patenterteilung: **24.07.2019**
(21) Anmeldenummer: 11151778.5
(22) Anmeldetag: 24.01.2011
(51) Int. Cl.: F24H 9/12, F28D 20/00

(54) **Speicher zum temperaturgeschichteten Speichern von warmen Flüssigkeiten unterschiedlicher Temperatur**
Storage device for storing warm liquids at different temperatures
Réservoir destiné au stockage échelonné en températures de liquides chauds de différentes températures

(30) Priorität: 27.01.2010 DE 102010005992
(43) Veröffentlichungstag der Anmeldung: 17.08.2011
(73) Patentinhaber: Solvis GmbH, 38122 Braunschweig (DE)
(72) Erfinder: Woelk, Karsten, 38527 Meine (DE); Grundei, Daniel, 38110 Braunschweig (DE); Form, Jochen, 38106 Braunschweig (DE); Morawe, Ansgar, 38118 Braunschweig (DE); Wendker, Kai, 38106 Braunschweig (DE)
(74) Vertreter: Einsel, Martin

(56) Entgegenhaltungen:
- AT-A4- 507 571
- US-A1- 2008 302 315

## Beschreibung

Die Erfindung betrifft einen Speicher zum temperaturgeschichteten Speichern von warmen Flüssigkeiten unterschiedlicher Temperatur, mit einem Mantel, welcher ein Speicherinneres umgibt, das für die Aufnahme der Flüssigkeiten vorgesehen ist, mit Beladeeinrichtungen zur Zufuhr einer Flüssigkeit in den Speicher, und mit Entladeeinrichtungen zum Entnehmen einer Flüssigkeit aus dem Speicher.

Für die Versorgung von Gebäuden mit Heizwärme und/oder erwärmtem Trinkwasser werden zunehmend Systeme eingesetzt, bei denen warmes Wasser oder eine andere warme Flüssigkeit in einem Speicher eingelagert wird und bei Bedarf abgerufen werden kann. Dadurch können Verbrauchsspitzen abgepuffert werden und/oder zeitliche Differenzen zwischen einer Wärmebereitstellung einerseits und einem auftretenden Wärmebedarf andererseits ausgeglichen werden, beispielsweise beim Einsatz einer thermischen Solaranlagen zur Beheizung. Derartige Speicher werden auch als Pufferspeicher bezeichnet.

Aus der EP 0 384 423 B1 und der DE 102 12 688 A1 ist es bekannt, derartige Pufferspeicher als Schichtenspeicher auszubilden. In derartigen Schichtenspeichern wird warme und insbesondere heiße Flüssigkeit bereitgehalten, damit sie bei Bedarf entnommen werden kann. Die Flüssigkeit wird temperaturabhängig in unterschiedlichen Schichten übereinander gespeichert, wobei von den temperaturbedingten Dichteunterschieden der Flüssigkeit Gebrauch gemacht wird. Diese Schichten sollen möglichst ungestört bleiben. Die Ausbildung einer Temperaturschichtung ist für die Effizienz des Gesamtsystems besonders vorteilhaft.

Die Entnahme erfolgt, um beispielsweise in einem Wärmetauscher beziehungsweise Wärmeübertrager eine Erwärmung von gerade benötigtem Brauchwasser vorzunehmen, wenn dieses etwa in Küche oder Bad angefordert wird, oder um beispielsweise direkt einem Heizkreis für die Raumheizung zugeführt zu werden. Die entsprechend dadurch abgekühlte Flüssigkeit wird dann in den Schichtenspeicher zurückgeleitet. Andererseits kann auch extern erwärmte Flüssigkeit zugeführt werden, beispielsweise aus einem Solarkreislauf oder auch aus anderen Wärmequellen.

Wird beispielsweise ein mit Heizungswasser als Fluid gefüllter Schichtenspeicher als Pufferspeicher eingesetzt, kann das Heizungswasser auf höchstem zur Verfügung stehenden Temperaturniveau aus dem oberen Speicherbereich entnommen werden, um beispielsweise über einen Wärmeübertrager Trinkwasser zu erwärmen. Nach Durchströmen des Wärmeübertragers ist das Heizungswasser beziehungsweise Fluid entsprechend abgekühlt. Es kann dann dem Speicher im unteren, mit kühlem Fluid gefüllten Bereich wieder zugeführt werden. Bei einer entsprechenden Auslegung eines Heizverteilsystems kann Heizungswasser auf mittlerem Temperaturniveau für den Heizungsvorlauf aus der Speichermitte entnommen werden. Der Heizungsrücklauf kann unterhalb des entsprechenden Entnahmepunktes wieder in den Schichtenspeicher zurückgeführt werden.

Dabei ist in der DE 10 2008 029 654 A1 auch schon vorgeschlagen worden, bei mehreren Heizkreisen, die ein unterschiedliches Rücklauf-Temperaturniveau besitzen, diese Rückläufe getrennt dem Schichtenspeicher zurück zu führen, wobei die Anordnung der Zufuhrpunkte entsprechend der zu erwartenden Temperaturen in unterschiedlichen Höhenstufen beispielsweise vertikal übereinander erfolgen sollte.

Bei einer Beheizung über eine thermische Solaranlage ist es für deren Wirkungsgrad von Vorteil, wenn der Solaranlage relativ kühles Wasser aus dem unteren Bereich des Schichtenwassers zugeführt wird. Andererseits kann der Solarvorlauf, wie etwa in der EP 0 384 423 B1 vorgeschlagen, temperaturorientiert zugeführt werden.

Auch für die Beheizung mit konventionellen Wärmequellen ist es sinnvoll, den Vorlauf (mit dem entsprechend warmen Fluid) in den oberen Speicherbereich einzubringen und den Rücklauf (mit dem entsprechend kühleren Fluid) aus dem unteren kühleren Bereich zu entnehmen.

Bei Brennwertkesseln kann auf diese Weise der erwünschte Brennwertnutzen zur Wirkungsgradsteigerung erzielt werden. Um hier das Speichervolumen des Schichtenspeichers optimal zu nutzen, ist es vorteilhaft, den Kesselrücklauf aus zwei unterschiedlichen Temperaturniveaus zu entnehmen und entsprechend der für den Brennwertbetrieb erforderlichen Rücklauftemperatur zu mischen.

Aus der US 2008/0302315 A1 ist ein Anschlussröhrchen für Heißwasserbereiter bekannt, welches über eine vertikale, nach unten gerichtete Konstruktion das Fluid führt, dann in einen kurzen horizontalen Abschnitt umbiegt und in einer Kappe endet. Der horizontale Abschnitt und die Kappe sind mit Löchern versehen. Dieses Dokument offenbart den Oberbegriff des Anspruchs 1.

Für die Schichten ist es besonders günstig, wenn das Wasser möglichst ruhig geschichtet bleibt, da Mischungen von Wasser mit unterschiedlichem Temperaturniveau zu unerwünschten Exergieverlusten und damit zu einer geringeren Effektivität führen. Das Temperaturniveau, auf dem die im Wasser enthaltene Wärmeenergie sich befindet, wird durch die Mischung herabgesetzt.

Die aus der EP 0 384 423 B1 und der DE 102 12 688 A1 bekannten Konzepte für solche Schichtenspeicher arbeiten mit Ladewechselvorrichtungen, die aus einem ein- oder mehrteiligen vertikal im Schichtenspeicher angeordneten Rohr bestehen. Das Rohr ist in bestimmten Höhen mit Öffnungen und gegebenenfalls Ventilanordnungen versehen, sodass Wasser einer bestimmten Temperatur möglichst in der passenden Schicht austreten und dort gewissermaßen eingeschichtet werden kann.

Dieses System hat sich sehr bewährt und ist auch vielfach weiter optimiert worden. Gleichwohl besteht der Wunsch, weitere Möglichkeiten für eine möglichst ungestörte Einschichtung von Fluiden in das Innere eines temperaturgeschichteten Speichers mit Flüssigkeiten einsetzen zu können.

Aufgabe der Erfindung ist es daher, eine solche weitere Möglichkeit vorzuschlagen.

Durch die Erfindung wird diese Aufgabe bei einem gattungsgemäßen Speicher dadurch gelöst, dass die mindestens eine Beladeeinrichtung oder Entladeeinrichtung von einem Anschluss im Mantel des Speichers entlang einer horizontal verlaufenden Längsachse in das Speicherinnere verläuft, dass diese mindestens eine Beladeeinrichtung oder Entladeeinrichtung einen um die horizontal verlaufende Längsachse angeordneten Mantel aufweist, der einen mit dem Anschluss in Verbindung stehenden Innenraum umgibt, dass diese mindestens eine Beladeeinrichtung oder Entladeeinrichtung über ihre Länge auf dem Umfang ihres Mantels mit Öffnungen ausgestattet ist, und dass diese mindestens eine Beladeeinrichtung oder Entladeeinrichtung sich vom Anschluss im Mantel des Speichers in Richtung des Speicherinneren verjüngt, wobei sich der Querschnitt der mindestens einen Beladeeinrichtung oder Enladeeinrichtung (31) über deren Länge stetig und kontinuierlich verjüngt.

Eine derartige Konzeption weist ein oder mehrere Elemente auf, die als Beladeeinrichtung, Entladeeinrichtung oder auch in einer Funktion als kombinierte Belade- und Entladeeinrichtung für Fluide in das Innere des Schichtenspeichers fungieren.

Das entsprechende Element weist ein rohrähnliches, längserstrecktes Teil auf, welches über einen erheblichen Teil seiner Länge mit Ein- und/oder Austrittsöffnungen versehen ist. Diese Ein- und/oder Austrittsöffnungen sind auf dem Umfang des rohrähnlichen Teils auch je nach Ausführungsform verteilt, können also in jede Richtung weisen.

Der Querschnitt des Teils verjüngt sich über seine Länge gesehen vom Mantel des Schichtenspeichers, wo der größte Querschnitt und der größte Durchmesser besteht, hin zur Spitze des rohrähnlichen Teils.

Das hat zur Folge, dass zugeführtes Fluid, also in erster Linie zugeführte Flüssigkeit, über die gesamte Länge des rohrähnlichen Teils durch die Ein- und/oder Austrittsöffnungen die Be- und/oder Entladeeinrichtung verlässt. Damit unterscheidet sich diese von herkömmlichen Be- und/oder Entladeeinrichtungen, die die Flüssigkeit erst am Ende oder jedenfalls einheitlich in einem bestimmten Bereich in den Schichtenspeicher abgeben. Dadurch, dass der Querschnitt sich verjüngt, besteht auch eine entsprechende Tendenz des Fluides, sich mehr oder weniger regelmäßig und damit besonders impulsarm aus den Ein- und Austrittsöffnungen in die umgebende Fluidschicht im Speicherinneren zu begeben. Ein Abziehen von Fluid aus dem Speicherinneren erfolgt ähnlich impulsschonend.

Durch die Erfindung entsteht eine ausgesprochen zuverlässige und gleichwohl einfache Möglichkeit, eine sehr impulsarme Beladung und Entladung eines Schichtenspeichers mit Fluid in eine beziehungsweise aus einer entsprechenden Temperaturschicht zu erzielen. Die Verwirbelung der Fluidmengen in dem temperaturgeschichteten Speicher ist minimal, da die einzelnen Fluid- beziehungsweise Flüssigkeitspartikel nur mit einem geringen Impuls aus der Belade- und/oder Entladeeinrichtung austreten und dabei die horizontalen Bereiche kaum verlassen.

In einer Ausführungsform weist das Rohr einen Mantel auf, der aus einem relativ zum größten Innendurchmesser dickwandigen Material besteht. Unter dickwandig ist ein Verhältnis von der Wandstärke zum größten Innendurchmesser des rohrartigen Teils von zumindest 1 zu 30 zu verstehen.

In diesem Mantel befinden sich dann über die Länge des rohrartigen Teils und ebenso über den Umfang des Mantels verteilt entsprechende Austritts- und/oder Eintrittsöffnungen für das Fluid.

Eine besonders bevorzugte Ausführungsform für eine Be- und Entladeeinrichtung weist als Mantel einen spiralförmig um eine horizontale Längsachse gewickelten Draht auf, der den Mantel bildet. Die Zwischenräume zwischen den Drahtwindungen stellen die Eintritts- und/oder Austrittsöffnungen für das Fluid dar.

Mit einer solchen Konzeption lassen sich die Eintritts- und Austrittsöffnungen besonders gleichmäßig über sowohl die gesamte Längserstreckung der Be-und/oder Entladeeinrichtung vorsehen, als auch zugleich eine gleichmäßige Verteilung über den Umfang der Einrichtung.

Da darüber hinaus quasi über die gesamte Mantelfläche das Fluid aus und in den Innenraum der Be- und/oder Entladeeinrichtung aus- und/oder eintreten kann, ist der den einzelnen aus- oder eintretenden Partikeln mitgegebene Impuls besonders gering, sodass die Schichten, in die diese Partikel eintreten, besonders wenig gestört und verwirbelt werden.

Ein weiterer Vorteil besteht darin, dass die einzelnen Belade- und Entladeeinrichtungen lageunabhängig sind. Die Abmessungen sind so geartet, dass sie eine erhebliche Größe in praktisch nur einer Richtung bei gleichzeitig geringem Durchmesser in den beiden anderen Richtungen besitzen und daher leicht in konventionelle Speicheröffnungen einbaubar sind, etwa in vorgesehene Muffen in einem Mantel des Schichtenspeichers.

Darüber hinaus kann jede einzelne Belade- und/oder Entladeeinrichtung für eine beliebige Anordnung und für nahezu beliebige Einsatzzwecke verwendet werden. Dies reduziert die Kosten und den sonstigen Aufwand für entsprechende Lagerhaltung und vereinfacht auch nachträgliche Änderungen, wenn beispielsweise aufgrund geänderter Einsatzverhältnisse eines temperaturgeschichteten Speichers eine zusätzliche oder eine andere Höhenlage für eine Belade- oder Entladeeinrichtung benötigt oder gewünscht wird.

Dadurch wird eine anlagenspezifische Ausstattung und Nachrüstung eines temperaturgeschichteten Speichers möglich, wobei eine für die Gesamteffizienz des Systems optimal positionierte Anordnung der Be- und Entnahmepunkte möglich wird.

Die einzelnen Belade- und Entladeeinrichtungen sind kostengünstig herstellbar. Dies führt dazu, dass auch unter wirtschaftlichen Gesichtspunkten der Einsatz einer relativ großen Zahl derartiger Einrichtungen in einem Schichtenspeicher möglich wird. Der Effektivitätsgewinn ist deutlich größer als die Kosten, die eine zusätzliche Belade- oder Entladeeinrichtung erfordert, sodass es keiner Überlegung mehr bedarf, ob möglicherweise zwei Entnahmepunkte zu einer Beladeeinrichtung zusammengefasst werden können.

Mit der Erfindung wird es also möglich, einen Pufferspeicher, der mit geeigneten Öffnungen ausgestattet ist, mit geeigneten Be- und/oder Entladeeinrichtungen anlagenspezifisch zu bestücken. Die Be- und Entladevolumenströme der jeweiligen Verbraucher oder Wärmequellen können vermischungsarm in die jeweilige Temperaturschicht im Pufferspeicher eingeführt beziehungsweise aus dieser abgeführt werden. Eine größtmögliche Effizienz des Gesamtsystems ist mithin erzielbar.

Es kann also ein Pufferspeicher vorgesehen werden, der mit einer Vielzahl von Be- und Entnahmepunkten ausgestattet ist und auf diese Weise eine sehr komplexe Anlagenkonfiguration aufzubauen erlaubt. Trotzdem ist eine optimale Anordnung und damit Einschichtung der Fluide entsprechend den jeweiligen Temperaturniveaus in den einzelnen Schichten möglich. Der Mehraufwand durch die Vielzahl an Be- und Entnahmepunkten wird durch eine sehr effiziente Nutzung des zur Verfügung stehenden Speichervolumens und eine entsprechende Energieeffizienz des Gesamtsystems belohnt.

Dies gelingt dadurch, dass die Zufuhr und die Abfuhr der jeweiligen Volumenströme der Fluide über die erfindungsgemäßen und sehr geeigneten Belade- und/oder Entladeeinrichtungen erfolgt. Die Temperaturschichtung wird durch die einströmenden und ausströmenden diversen sich überlagernden Verbrauchs- und Wärmequellenvolumenströme nicht verwirbelt und auch nicht in anderer Form zerstört. Alle Fluide werden impulsarm in die beziehungsweise aus der passenden Temperaturschicht des Fluides im Schichtenspeicher zugeführt beziehungsweise abgeführt.

Anders als bei den bewährten Beladeeinrichtungen, auch als Schichtenlader bezeichnet, die etwa aus der EP 0 384 423 B1 bekannt sind, wird hier also nicht eine Beladung des Schichtenspeichers temperaturorientiert in eine jeweils passende Speicherhöhe vorgenommen, die strömungsmechanisch mittels Dichteunterschied bei diesen herkömmlichen Anlagen erfolgt. Falls gewünscht, können derartige Beladeeinrichtungen ergänzend und zusätzlich genutzt werden.

Es wird jedoch erfindungsgemäß vor Allem von der Erkenntnis Gebrauch gemacht, dass die Temperaturniveaus der einzuschichtenden Zulaufströme nur in relativ engen Grenzen variieren, wofür die herkömmlichen Beladeeinrichtungen teilweise zu aufwändig wären.

Die Erfindung würde im Falle von in bestimmten Grenzen variierenden Temperaturen von Zulaufströmen und Umständen diese außerhalb des Pufferspeichers auf zwei Beladeeinrichtungen aufteilen.

Eine Beladung oder Entladung auf einer fixen Speicherhöhe wird dadurch unterstützt, dass das ungefähre Temperaturniveau der Zulaufströme und Ablaufströme bereits in der Planungsphase einer Anlage bekannt ist. Daher kann dann auch die sinnvolle vertikale Position oder Reihenfolge der Anordnung der entsprechenden Be- und Entnahmepunkte für die Fluide festgelegt werden.

Bei Versuchen hat sich bereits gezeigt, dass die erfindungsgemäß ausgebildeten Belade- und/oder Entladeeinrichtungen sich außerordentlich vorteilhaft bemerkbar machen. Gerade bei der bevorzugten gewickelten Ausführungsform zeigt sich, dass das Ausströmen des Zugeführten Fluids gleichmäßig über die Länge der lanzenähnlichen Elemente verteilt wird und der tendenziell das Fluid im Schichtenspeicher verwirbelnde Impuls des ausströmenden Fluides sehr gering ist.

Auch die Temperaturentwicklung der verschiedenen Schichten im Speicher während der Beladung ist günstiger. Bei Versuchen hat sich lediglich der oberhalb der Beladung mit warmem Wasser befindliche Speicherbereich während der Versuchszeit erwärmt; nur dieser ist also beeinflusst worden.

Im Folgenden wird anhand der Zeichnungen ein Ausführungsbeispiel der Erfindung näher erläutert. Es zeigen:
- **Figur 1**: eine schematische Darstellung eines Pufferspeichers;
- **Figur 2**: eine Skizze eines Ausführungsbeispiels der erfindungsgemäßen Be- und Entladeeinrichtung in Seitenansicht, und
- **Figur 3**: eine vergrößerte, perspektivische Darstellung eines Details der Be- und Entladeeinrichtung aus Figur 2.

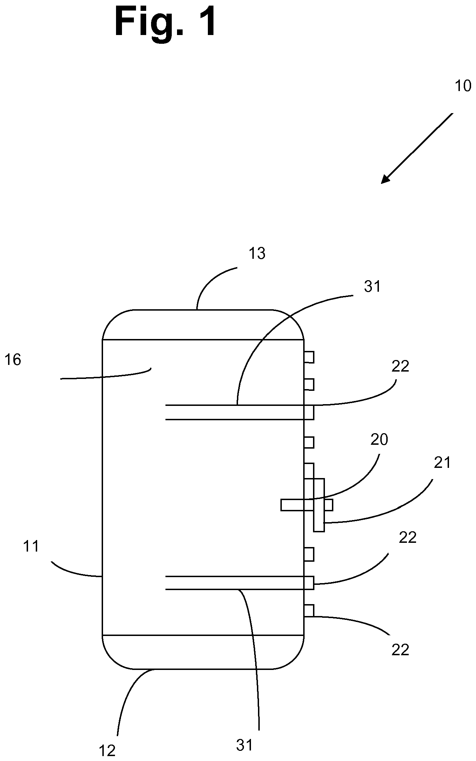

Ein in der **Figur 1** dargestellter Speicher 10 für die schichtenförmige Speicherung von warmen Flüssigkeiten besitzt einen Mantel 11. Im Inneren des Speichers 10 und seines Mantels 11 wird eine Flüssigkeit gespeichert. Es kann sich um Wasser handeln oder insbesondere auch um eine Mischung aus Wasser mit zusätzlichen Stoffen, etwa mit Gefrierschutzmitteln oder dergleichen.

Der Speicher 10 besitzt neben dem Mantel 11 noch einen Boden 12 und eine Oberseite 13. Der Mantel 11 ist beispielsweise zylindrisch um eine vertikale Achse oder aber auch etwa quaderförmig, wobei die kleinste Seitenfläche des Quaders von dem Boden 12 und der Oberseite 13 gebildet wird. Üblicherweise steht der Speicher 10 also aufrecht.

Der Speicher 10 kann entweder fertig ab Werk vormontiert werden oder aber auch in Teilen direkt in einem Keller aufgebaut werden.

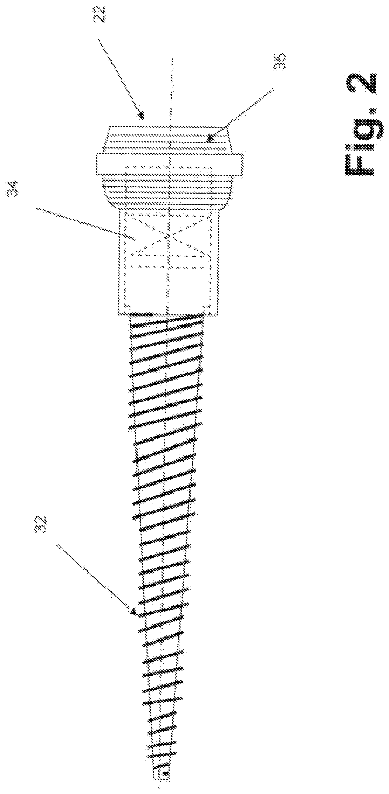

Der Mantel 11 nebst Boden 12 und Oberseite 13 umgibt ein Speicherinneres 16 des Speichers 10. Im Inneren 16 (siehe Figur 2) des Speichers 10 innerhalb des Mantels 11 wird nun versucht, die Flüssigkeit so zu speichern, dass nach Möglichkeit keine oder nur geringe Strömungen und Vermischungen auftreten. Das führt dazu, dass temperaturbedingt die heißeren Flüssigkeitsschichten oben im Speicher 10 liegen, die kälteren dagegen unten. Dies liegt an der geringeren Dichte der heißeren Flüssigkeitsschichten.

In dem Mantel 11 kann sich unter anderem auch eine Ausnehmung 20 befinden. Die Ausnehmung 20 kann durch einen Flanschdeckel 21 verschlossen sein.

In dem Flanschdeckel 21 oder auch in dem Mantel 11 selbst sind Öffnungen 22 vorgesehen. Diese Öffnungen 22 dienen zur Durchleitung von Flüssigkeit in das Speicherinnere 16 hinein. Zugleich können diese Öffnungen 22 auch als Muffen oder Anschlüsse ausgebildet sein, um die noch im Folgenden detaillierter beschriebenen Be- und Entladeeinrichtungen 31 zu befestigen und anzuschließen.

Zwei derartige Be- und Entladeeinrichtungen 31 sind schematisch in der Figur 1 schon eingezeichnet, um ihre mögliche Position anzudeuten. Die Zahl der Be- und Entladeeinrichtungen 31 kann jedoch auch deutlich größer sein und diese können in verschiedenen horizontalen Positionen übereinander oder auch schräg versetzt oder nebeneinander vorgesehen und eingebaut sein.

Die Be- oder Entladeeinrichtungen 31 dienen üblicherweise entweder jeweils einzeln nur als Beladeeinrichtung oder als Entladeeinrichtung. Sie sind jedoch sehr ähnlich aufgebaut. Grundsätzlich wäre es sogar möglich, beide Einrichtungen identisch auszubilden, wodurch eine kostengünstigere Fertigung und Lagerhaltung möglich wäre.

Die jeweiligen Arten können sich jedoch unterscheiden und es ist auch möglich, je nach Verwendungszweck verschieden ausgebildete Beladeeinrichtungen und verschieden ausgebildete Entladeeinrichtungen einzusetzen.

In der **Figur 2** ist die Belade- und/oder Entladeeinrichtung 31 wesentlich größer herausgezeichnet. Man sieht hier ein besonders bevorzugtes Ausführungsbeispiel.

Die Belade- und/oder Entladeeinrichtung 31 weist insbesondere einen äußeren Mantel 32 auf, der in der dargestellten Ausführungsform durch eine spiralförmig ausgebildete Feder aufgebaut wird. Diese Spiralfeder des Mantels 32 ist rotationssymmetrisch zu einer Längsachse ausgebildet, die sich horizontal im Speicherinneren 16 ausgehend vom Mantel 11 nach innen erstreckt und dort ausläuft (vergleiche Figur 1). Die Spiralfeder des Mantels 32 ist dabei in dieser Ausführungsform konisch ausgebildet. Der Konus besitzt seinen größten Durchmesser, zugleich den größten Querschnitt, auf der dem Mantel 11 des Speichers 10 zugewandten Seite an dem Anschluss 22 (vergleiche Figur 1), während er auf der abgewandten und im Speicherinneren 16 auslaufenden Seite den geringsten Querschnitt und den geringsten Durchmesser besitzt.

Das dargestellte Ausführungsbeispiel zeigt zur Querschnittsverjüngung eine konische Form. Diese konische Form hat den Vorteil, fertigungstechnisch mit dem geringsten Aufwand herstellbar zu sein. Grundsätzlich muss die Verjüngung jedoch nicht gleichmäßig und stetig erfolgen. Es sind also auch andere als lineare Verjüngungen dieses Querschnittes möglich.

Dadurch, dass der Mantel 32 der Be- oder Entladeeinrichtung 31 durch eine Spiralfeder gebildet wird, ergibt sich zugleich eine Spiralform für die Lücken zwischen den aufeinander folgenden Windungen oder Wicklungen der Spiralfeder. Betrachtet man sich die Raumform der so gebildeten Lücken, so sind auch sie in Richtung der Längserstreckung gleichmäßig, wie die Spiralfeder selbst, von der sie gebildet werden, und der Durchmesser dieser Lücken verjüngt sich auch in Richtung zur Spitze der konischen Anordnung der Spiralfeder des Mantels 32.

Es entsteht auf diese Weise also eine konisch zulaufende, vergleichsweise dickwandige und mit einer umlaufenden kontinuierlichen Öffnung versehene Konstruktion des Mantels 32.

Es ist leicht vorstellbar, dass ein Fluid, das von der mit dem großen Querschnitt ausgestatteten Seite der Belade- und/oder Entladeeinrichtung 31 am Anschluss 22 aus einströmt, regelmäßig und gleichmäßig durch diese kontinuierliche Öffnung ausströmt, ohne dabei relevant radialen Impuls zu gewinnen.

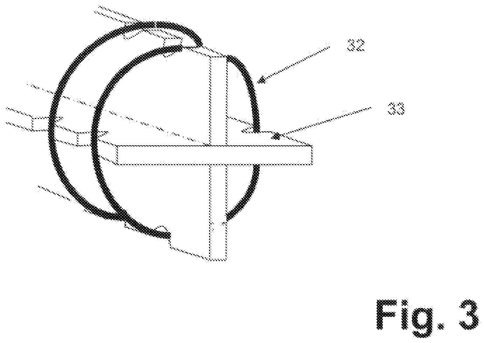

In der **Figur 3** ist ein Detail der in der Figur 2 dargestellten Be- und Entladeeinrichtung 31 zu sehen. Die Figur ist perspektivisch und stellt eine schematische Ansicht auf einen Schnitt senkrecht zur Längsachse durch den Mantel 32 der Be- und Entladeeinrichtung 31 dar.

Um sowohl die den Mantel 32 bildende Spiralfeder mechanisch zu stützen, als auch um die innerhalb des Mantels 32 herrschende Fluidströmung zu stabilisieren ist in der dargestellten Ausführungsform auch ein Keil 33 vorgesehen.

Der Keil 33 ist im Querschnitt senkrecht zur Längsachse des Mantels 32 in der dargestellten Ausführungsform kreuzförmig.

Das bedeutet, dass dieser kreuzförmige Keil 33 über den Umgang des Mantels 32 diesen an vier Punkten stützt. Zugleich teilt er dadurch die Strömung auch in 4/4 auf.

Der im Schnitt kreuzförmige Keil 33 besteht also anders betrachtet aus zwei dreieckförmigen und vertikal aufeinander stehenden und sich durchdringenden Plattenelementen. Die Dreiecke dieser beiden Plattenelemente sind außerordentlich spitzwinkelig, wobei der spitze Winkel sich am konisch verjüngten Ende der Be- oder Entladeeinrichtung 31 befindet.

Um die Spiralfedern des Mantels 32 noch besser zu stabilisieren und zu fixieren, können diese beiden plattenförmigen Elemente mit zahnähnlichen Einschnitten versehen sein, in die sich dann die Wicklungen der Spiralfeder des Mantels 32 legen.

Der Keil 33 kann in seiner Verlängerung in Richtung zum Mantel 11 des Speichers 10 in einem Rohrstück 34 sitzen, welches wiederum in Figur 2 gut zu erkennen ist.

An dem dem Mantel 32 und dem Keil 33 gegenüberliegenden Ende des Rohrstückes 34 kann ein Doppelnippel 35 montiert sein.

Im Inneren des Rohrstückes kann eine Konvektionsbremse beispielsweise in Form eines verdrillten Bleches eingebracht sein. Dies ist in der Figur 2 gestrichelt angedeutet.

Als Material für alle Elemente und Teile der Belade- und/oder Entladevorrichtung 31 kann unlegierter Stahl verwendet werden. Dieser ist besonders kostengünstig und die einzelnen Elemente, beispielsweise der Keil 33 und der Mantel 32 sowie das Rohrstück 34, können dann einfach mit wenigen Schweißpunkten miteinander fixiert werden. Dieser Werkstoff ist hinreichend bei einem Einsatz in einem mit Heizungswasser gefüllten Pufferspeicher 10.

Die gesamte Belade- und/oder Entladeeinrichtung 31 kann in eine Speichermuffe als Öffnung 22 (vergleiche Figur 1) eingeführt werden und wird dann mit der einen Seite des Doppelnippels 35 dort eingedichtet. Die andere Seite des Dippelnippels ermöglicht dem Handwerker einen problemlosen Anschluss einer weiteren Anlagenverrohrung.

Die dem Speicher 10 zuzuführende Flüssigkeit beziehungsweise das Fluid strömt nun durch den Doppelnippel 35 und das Rohrstück 34 und dann beidseitig des Keils 33 vorbei durch die Öffnungen der konischen Feder zwischen den spiralförmigen Windungen in das Speicherinnere 16 hinein.

Die konische Form der Feder des Mantels 32, der relativ große Durchmesser des Federstahls und die angepasste Steigung der Feder bewirkt dann eine gleichmäßige Verteilung des Volumenstroms über die gesamte Länge des Mantels 32 der Belade- und/oder Entladeeinrichtung 31. Dadurch erfolgt eine Geschwindigkeitsreduzierung im Austritt und damit eine impulsarme Zufuhr in den Speicher 10.

Bei einem Einsatz als Entladeeinrichtung erfolgt die Entnahme des Fluides aus dem Speicher 10 ebenfalls über die konische Feder des Mantels 32 in umgekehrter Flussrichtung.

In einer nicht dargestellten Ausführungsform kann anstelle der spiralförmigen Feder für den Mantel 32 auch ein ebenfalls konisch ausgebildetes Lochblechrohr mit entsprechend dicker Wandung eingesetzt werden.

Denkbar ist auch eine von einer konischen Form abweichende äußere Form, etwa eine Parabelform.

In einer weiteren Ausführungsform wäre auch eine über die Länge veränderliche Steigung der Feder des Mantels 32 denkbar.

Anstelle von unlegiertem Stahl könnten als Werkstoffe auch Kunststoff, Kupfer oder Edelstahl eingesetzt werden.

Auch eine andere Form einer inneren Führung als ein Keil 33, insbesondere als ein Keil in Kreuzform, ist denkbar. Da die Federwirkung der Feder nicht eingesetzt wird, kann auch ein herkömmlicher Draht verwendet und gewickelt werden.

Anstelle eines Doppelnippels 35 könnte auch ein Flansch oder eine andere Anschlussart und eine entsprechende Speicheröffnung 22 eingesetzt werden.

### Bezugszeichenliste

- 10: Speicher
- 11: Mantel des Speichers 10
- 12: Boden des Speichers 10
- 13: Oberseite des Speichers 10
- 16: Speicherinneres

- 20: Ausnehmung
- 21: Flanschdeckel
- 22: Öffnungen für Anschlüsse

- 31: Be- oder Entladeeinrichtung
- 32: Mantel
- 33: Keil
- 34: Rohrstück
- 35: Doppelnippel

## Patentansprüche

1. Speicher (10) zum temperaturgeschichteten Speichern von warmen Flüssigkeiten unterschiedlicher Temperatur,
mit einem Mantel (11), welcher ein Speicherinneres (16) umgibt, das für die Aufnahme der Flüssigkeiten vorgesehen ist,
mit Beladeeinrichtungen (31) zur Zufuhr einer Flüssigkeit in den Speicher (10), und
mit Entladeeinrichtungen (31) zum Entnehmen einer Flüssigkeit aus dem Speicher (10), wobei mindestens eine der Beladeeinrichtungen oder Entladeeinrichtungen (31) von einem Anschluss (22) im Mantel (11) des Speichers (10) entlang einer horizontal verlaufenden Längsachse in das Speicherinnere (16) verläuft, diese mindestens eine Beladeeinrichtung oder Entladeeinrichtung (31) einen um die horizontal verlaufende Längsachse angeordneten Mantel (32) aufweist, der einen
mit dem Anschluss (22) in Verbindung stehenden Innenraum umgibt, diese mindestens eine Beladeeinrichtung oder Entladeeinrichtung (31) sich vom Anschluss (22) im Mantel (11) des Speichers (10) in Richtung des Speicherinneren (16) verjüngt,
**dadurch gekennzeichnet, dass** diese mindestens eine Beladeeinrichtung oder Entladeeinrichtung (31) über ihre Länge auf dem Umfang ihres Mantels (32) mit Öffnungen ausgestattet ist, und sich der Querschnitt der mindestens einen Beladeeinrichtung oder Entladeeinrichtung (31) über deren Länge stetig und kontinuierlich verjüngt.

2. Speicher (10) nach Anspruch 1,
**dadurch gekennzeichnet,**
**dass** die Verjüngung des Querschnittes linear verläuft.

3. Speicher (10) nach einem der vorstehenden Ansprüche,
**dadurch gekennzeichnet,**
**dass** der Mantel (32) der mindestens einen Beladeeinrichtung oder Entladeeinrichtung (31) umlaufend Öffnungen aus deren Innenraum in das Speicherinnere (16) aufweist.

4. Speicher (10) nach einem der vorstehenden Ansprüche,
**dadurch gekennzeichnet,**
**dass** die Dicke des Mantels (32) der mindestens einen Beladeeinrichtung oder Entladeeinrichtung (31) zumindest ein Verhältnis von 1 zu 30 zum Innendurchmesser der mindestens einen Beladeeinrichtung oder Entladeeinrichtung (31) aufweist.

5. Speicher (10) nach einem der vorstehenden Ansprüche,
**dadurch gekennzeichnet,**
**dass** die mindestens eine Beladeeinrichtung oder Entladeeinrichtung (31) aus unlegiertem Stahl besteht.

6. Speicher (10) nach einem der vorstehenden Ansprüche,
**dadurch gekennzeichnet,**
**dass** zumindest eine Beladeeinrichtung (31) und eine Entladeeinrichtung (31) vorgesehen sind und dass diese in unterschiedlicher Höhenlage im Speicherinneren (16) angeordnet sind.

7. Speicher (10) nach einem der vorstehenden Ansprüche,
**dadurch gekennzeichnet,**
**dass** der Mantel (32) der mindestens einer Belandeeinrichtung und/oder Entladeeinrichtung (31) eine spiralförmig um die horizontal verlaufende Längsachse angeordneten Draht oder einer entsprechenden Spiralfeder aufweist, und
**dass** zwischen den Wicklungen des spiralförmig gewundenen Drahtes oder der Spiralfeder jeweils ein Abstand besteht, welcher Abstand die Öffnungen vom Innenraum der Beladeeinrichtung oder Entladeeinrichtung in das Speicherinnere (16) bildet.

8. Speicher (10) nach Anspruch 7,
**dadurch gekennzeichnet,**
**dass** innerhalb des Mantels (32) ein stützender Keil (33) zur Stabilisierung angeordnet ist.

9. Speicher (10) nach Anspruch 8,
**dadurch gekennzeichnet,**
**dass** der Keil (33) ein Profil besitzt, welches im Schnitt senkrecht zur Längsachse der mindestens einen Beladeeinrichtung oder Entladeeinrichtung (31) kreuzförmig ist.

## Claims

1. A storage device (10) for the storage in layers according to temperature of warm liquids having different temperatures,
with a casing (11), which surrounds a storage interior (16), which is provided for receiving liquids,
with charge devices (31) for the supply of a liquid into the storage device (10), and
with discharge devices (31) for the removal of a liquid from the storage device (10),
wherein at least one of the charge devices or discharge devices (31) runs into the storage interior (16) from a connection (22) in the casing (11) of the storage device (10) along a horizontally-extending longitudinal axis,
this at least one charge device or discharge device (31) has a casing (32) which is arranged around the longitudinal axis and which surrounds an interior space connected to the connection (22)
this at least one charge device or discharge device (31) tapers from the connection (22) in the casing (11) of the storage device (10) in the direction of the storage interior (16),
**characterised in that** this at least one charge device or discharge device (31) is provided with openings over its length on the periphery of its casing (32), and the cross-section of the at least one charge device or discharge device (31) tapers steadily and continuously over its length.

2. A storage device (10) according to claim 1.
**characterised in that**
the tapering of the cross-section is linear.

3. A storage device (10) according to any one of the preceding claims,
**characterised in that**
the casing (32) of the at least one charge or discharge device (31) has peripheral openings from its interior space into the storage interior (16).

4. A storage device (10) according to any one of the preceding claims,
**characterised in that**
the thickness of the casing (32) of the at least one charge device or discharge device (31) has a ratio of at least 1 to 30 to the interior diameter of the at least one charge device or discharge device (31).

5. A storage device (10) according to any one of the preceding claims,
**characterised in that**
the at least one charge device or discharge device (31) consists of unalloyed steel.

6. A storage device (10) according to any one of the preceding claims,
**characterised in that**
there are provided at least one charge device (31) and one discharge device (31) and **in that** these are arranged at different heights in the storage interior (16).

7. A storage device (10) according to any one of the preceding claims,
**characterised in that**
the casing (32) of the at least one charge device and/or discharge device (31) has a wire arranged spirally about the horizontally-extending longitudinal axis or a corresponding coil spring, and **in that** a spacing exists between the windings of the spirally-wound wire or of the coil spring, which spacing forms the openings from the interior of the charge device or discharge device into the storage interior (16).

8. A storage device (10) according to claim 7,
**characterised in that**
there is arranged within the casing (32) a supporting wedge (33) for the purpose of stabilisation.

9. A storage device (10) according to claim 8,
**characterised in that**
the wedge (33) has a profile which, in a section perpendicular to the longitudinal axis of the at least one charge device or discharge device (31), has the shape of a cross.

## Revendications

1. Réservoir (10) servant au stockage échelonné en températures de liquides chauds de température différente,
avec une gaine (11), laquelle entoure un intérieur de réservoir (16), qui est prévu pour la réception de liquides,
avec des dispositifs de chargement (31) servant à amener un liquide dans le réservoir (10), et
avec des dispositifs de déchargement (31) servant à prélever un liquide hors du réservoir (10),
dans lequel au moins un des dispositifs de chargement ou dispositifs de déchargement (31) s'étend depuis un raccord (22) dans la gaine (11) du réservoir (10) le long d'un axe longitudinal s'étendant de manière horizontale dans l'intérieur de réservoir (16),
ledit au moins un dispositif de chargement ou dispositif de déchargement (31) présente une gaine (32) disposée autour de l'axe longitudinal s'étendant de manière horizontale, qui entoure un espace intérieur relié au raccord (22),
ledit au moins un dispositif de chargement ou dispositif de déchargement (31) se rétrécit depuis le raccord (22) dans la gaine (11) du réservoir (10) en direction de l'intérieur de réservoir (16),
**caractérisé en ce**
**que** ledit au moins un dispositif de chargement ou dispositif de déchargement (31) est équipé sur sa longueur sur la périphérie de sa gaine (32) d'ouvertures, et
la section transversale de l'au moins un dispositif de chargement ou dispositif de déchargement (31) se rétrécit sur sa longueur en permanence et en continu.

2. Réservoir (10) selon la revendication 1,
**caractérisé en ce**
**que** le rétrécissement de la section transversale s'étend de manière linéaire.

3. Réservoir (10) selon l'une quelconque des revendications précédentes,
**caractérisé en ce**
**que** la gaine (32) de l'au moins un dispositif de chargement ou dispositif de déchargement (31) présente en périphérie des ouvertures menant hors de son espace intérieur dans l'intérieur de réservoir (16).

4. Réservoir (10) selon l'une quelconque des revendications précédentes,
**caractérisé en ce**
**que** l'épaisseur de la gaine (32) de l'au moins un dispositif de chargement ou dispositif de déchargement (31) présente au moins un rapport de 1 à 30 par rapport au diamètre intérieur de l'au moins un dispositif de chargement ou dispositif de déchargement (31).

5. Réservoir (10) selon l'une quelconque des revendications précédentes,
**caractérisé en ce**
**que** l'au moins un dispositif de chargement ou dispositif de déchargement (31) est constitué d'un alliage non allié.

6. Réservoir (10) selon l'une quelconque des revendications précédentes,
**caractérisé en ce**
**qu'**au moins un dispositif de chargement (31) et un dispositif de déchargement (31) sont prévus, et que ceux-ci sont disposés dans une position en hauteur différente dans l'intérieur de réservoir (16).

7. Réservoir (10) selon l'une quelconque des revendications précédentes,
**caractérisé en ce**
**que** la gaine (32) de l'au moins un dispositif de chargement et/ou de déchargement (31) présente un fil métallique disposé en forme de spirale autour de l'axe longitudinal s'étendant de manière horizontale ou un ressort spiral correspondant, et
**qu'**il existe entre les enroulements du fil métallique enroulé en forme de spirale ou du ressort spiral, respectivement un espacement, lequel espacement forme les ouvertures de l'espace intérieur du dispositif de chargement ou dispositif de déchargement dans l'intérieur de réservoir (16).

8. Réservoir (10) selon la revendication 7,
**caractérisé en ce**
**qu'**une clavette (33) d'appui servant à la stabilisation est disposée à l'intérieur de la gaine (32).

9. Réservoir (10) selon la revendication 8,
**caractérisé en ce**
**que** la clavette (33) possède un profil, lequel est en forme de croix dans la coupe de manière perpendiculaire par rapport à l'axe longitudinal de l'au moins un dispositif de chargement ou dispositif de déchargement (31).
